# FASCICULE DE BREVET EUROPEEN

(11) **EP 4 155 213 B1**
(45) Date de publication et mention de la délivrance du brevet: **31.07.2024**
(21) Numéro de dépôt: 22196763.1
(22) Date de dépôt: 21.09.2022
(51) Int. Cl.: B64D 37/30, B64D 37/32

(54) **AÉRONEF COMPORTANT UNE CANALISATION DE TRANSPORT DE DIHYDROGÈNE ET UN CANAL D'ENFOUISSEMENT DE LADITE CANALISATION DE TRANSPORT**
FLUGZEUG MIT EINER DIWASSERSTOFFTRANSPORTLEITUNG UND EINEM EINGRABENKANAL DER BESAGTEN TRANSPORTLEITUNG
AIRCRAFT COMPRISING A DIHYDROGEN TRANSPORT PIPE AND A DUCT FILLING SAID TRANSPORT PIPE

(30) Priorité: 22.09.2021 FR 2109990
(43) Date de publication de la demande: 29.03.2023
(73) Titulaire: Airbus, 31700 Blagnac (FR); AIRBUS OPERATIONS, 31060 Toulouse Cedex 9 (FR)
(72) Inventeur: MILLIERE, Jérome, 31060 TOULOUSE (FR); JOUBERT, Romain, 31060 TOULOUSE (FR); TEYSSEDRE, Lionel, 31700 BLAGNAC (FR); FORBES, Alistair, 31060 TOULOUSE (FR)
(74) Mandataire: Cabinet Le Guen Maillet

(56) Documents cités:
- JP-A- 2001 338 660
- US-A1- 2013 288 160

## Description

### DOMAINE TECHNIQUE

La présente invention se rapporte au domaine des aéronefs et, en particulier, des aéronefs dont la source d'énergie est du dihydrogène liquide ou gazeux que ce soit pour alimenter une pile à combustible ou directement la chambre de combustion d'un moteur. La présente invention concerne ainsi un aéronef comportant une canalisation de transport de dihydrogène et un canal d'enfouissement qui permet le passage de la canalisation de transport.

### ÉTAT DE LA TECHNIQUE ANTÉRIEURE

Il est connu d'utiliser le dihydrogène comme source d'énergie dans un aéronef. Le dihydrogène est stocké dans un réservoir et une canalisation de transport assure le transport du dihydrogène du réservoir vers le dispositif consommateur, comme par exemple une pile à combustible ou la chambre de combustion d'un moteur.

En cas de fuite de dihydrogène le long de cette canalisation de transport, et pour éviter la création d'un mélange inflammable autour de la zone de fuite, il est nécessaire de prévoir des dispositifs dédiés.

Il est ainsi possible de supprimer la présence du comburant (l'oxygène contenu dans l'air ambiant) nécessaire à l'ignition et de le remplacer par un gaz inerte.

Il est également possible de ventiler la zone de fuite afin de limiter la proportion de dihydrogène dans le mélange et ainsi rester en dessous du seuil d'inflammabilité.

Lorsque la canalisation de transport est longue, la mise en place de tels dispositifs engendre de fortes pénalités au niveau de l'aéronef en termes de masse, de coût, de consommation d'énergie, de contraintes d'intégration physique et nécessite de prévoir des systèmes de surveillance en temps réel du bon fonctionnement de chacun des dispositifs.

Les documents US-A-2013/288160 et JP-A-2001-338660 divulguent des aéronefs de l'état de la technique.

### EXPOSÉ DE L'INVENTION

Un objet de la présente invention est de proposer un aéronef comportant une canalisation de transport de dihydrogène et un canal d'enfouissement qui permet le passage de la canalisation de transport tout en assurant une évacuation du dihydrogène en cas de fuite en utilisant une ventilation passive pendant les phases de vol.

À cet effet, est proposé un aéronef comportant au moins une canalisation de transport dans laquelle s'écoule du dihydrogène et pour chaque canalisation de transport, un canal d'enfouissement dans lequel est logée ladite canalisation de transport, où le canal d'enfouissement comporte un caniveau qui comporte un fond et une ouverture à l'opposé du fond et un couvercle qui recouvre l'ouverture du caniveau, où le couvercle constitue une paroi extérieure de l'aéronef en contact direct avec un air extérieur entourant l'aéronef et où le couvercle est percé des fenêtres de ventilation qui permettent le passage du dihydrogène vers l'extérieur.

Avec un tel arrangement, même en cas de fuite de dihydrogène dans le canal d'enfouissement, le dihydrogène s'évacue automatiquement vers l'extérieur.

Avantageusement, chaque fenêtre de ventilation est fermée par un bouchon réalisé d'un matériau respirant qui est imperméable pour de l'eau extérieure et perméable pour du dihydrogène présent dans le canal d'enfouissement.

Avantageusement, le ou chaque caniveau comporte au moins un point bas au niveau du fond, l'aéronef comporte, pour chaque point bas, une canalisation d'évacuation dont une première extrémité est fluidiquement connectée au caniveau au niveau du point bas et dont une deuxième extrémité débouche vers l'extérieur de l'aéronef et la canalisation d'évacuation présente une pente descendante entre la première extrémité et la deuxième extrémité.

Avantageusement, l'aéronef comporte un système de ventilation qui est arrangé pour chauffer de l'air extérieur et pour envoyer cet air ainsi chauffé dans chaque canal d'enfouissement.

Avantageusement, le système de ventilation comporte une entrée d'air ouverte vers l'avant de l'aéronef, un canal d'aération fluidiquement connecté entre l'entrée et chaque canal d'enfouissement, et au moins un moyen de chauffage logé dans le canal d'aération.

Avantageusement, le canal d'aération comporte un sous-canal bâbord s'étendant d'un premier côté du canal d'aération et alimentant des premiers canaux d'enfouissement et un sous-canal tribord s'étendant d'un second côté du canal d'aération et alimentant des deuxièmes canaux d'enfouissement, il y a un moyen auxiliaire de chauffage dans chaque sous-canal, l'entrée d'air comporte une bouche centrale équipée d'un ventilateur, une bouche latérale bâbord associée au sous-canal bâbord et une bouche latérale tribord associée au sous-canal tribord, un système de sélection qui est arrangé pour assurer, d'une part, que le sous-canal bâbord et les premiers canaux d'enfouissement à bâbord sont alimentés alternativement par la bouche latérale bâbord ou par la bouche centrale et, d'autre part, que le sous-canal tribord et les deuxièmes canaux d'enfouissement à tribord sont alimentés alternativement par la bouche latérale tribord ou par la bouche centrale.

Avantageusement, le système de sélection comporte une porte bâbord et une porte tribord, et chaque porte est mobile entre une première position dans laquelle la porte obture la partie de la bouche centrale qui alimente le côté de ladite porte et n'obture pas la bouche latérale correspondant au côté de ladite porte, et une deuxième position dans laquelle la porte obture la bouche latérale correspondant au côté de ladite porte et n'obture pas la partie de la bouche centrale qui alimente le côté de ladite porte.

Avantageusement, le caniveau comporte un plancher intermédiaire qui sépare le caniveau en un caniveau supérieur dans lequel est fixée la canalisation de transport et un caniveau inférieur dans lequel circule l'air chaud provenant du système de ventilation et le plancher intermédiaire est percé de trous.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de dessus d'un aéronef selon l'invention,
[Fig. 2] est une vue en coupe du fuselage de l'aéronef de la Fig. 1 selon la ligne II-II,
[Fig. 3] est une vue en coupe d'une aile de l'aéronef de la Fig. 1 selon la ligne III-III,
[Fig. 4] est un agrandissement du caisson de voilure de la Fig. 3,
[Fig. 5] est une vue en perspective d'un canal d'enfouissement selon l'invention,
[Fig. 6] est une vue de dessus d'un système de ventilation mis en oeuvre dans le cadre d'un mode de réalisation de l'invention.

### EXPOSÉ DÉTAILLÉ DE MODES DE RÉALISATION

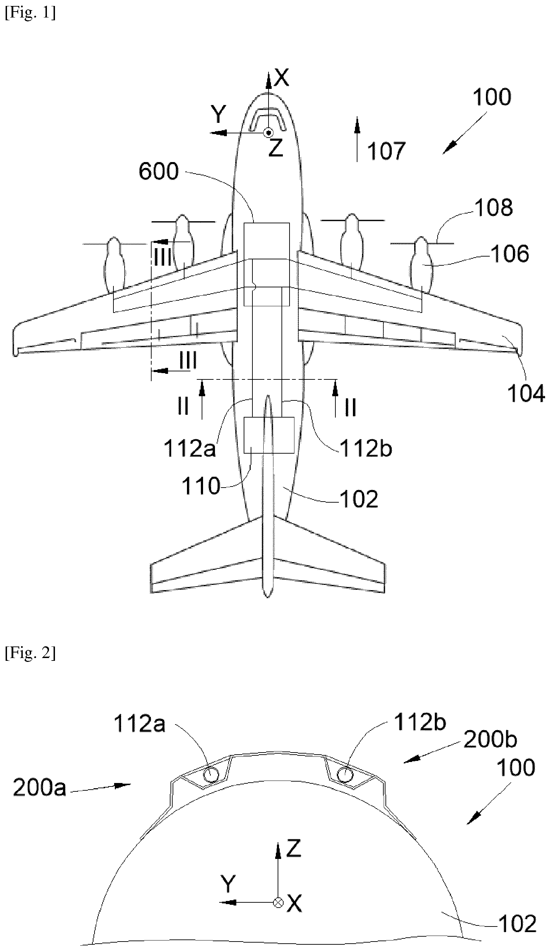

La Fig. 1 montre un aéronef 100 qui présente un fuselage 102 de part et d'autre duquel est fixée une aile 104. Sous chaque aile 104 est fixé au moins un système de propulsion 106.

Par convention, on appelle X la direction longitudinale de l'aéronef 100, Y la direction transversale de l'aéronef 100 qui est horizontale lorsque l'aéronef est au sol, et Z la direction verticale ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 100 lors du fonctionnement des systèmes de propulsion 106, cette direction étant représentée schématiquement par la flèche 107.

Dans le mode de réalisation de l'invention présenté ici, chaque système de propulsion 106 comprend un moteur électrique, une hélice 108 montée sur l'arbre moteur dudit moteur électrique et une pile à combustible qui alimente le moteur en électricité.

La pile à combustible est alimentée en oxygène et en dihydrogène afin de produire de l'électricité.

Dans un autre mode de réalisation, le système de propulsion 106 peut prendre la forme d'un turboréacteur dont le carburant qui est brûlé dans la chambre de combustion est du dihydrogène.

L'aéronef 100 comporte également un réservoir de dihydrogène 110 qui est disposé ici dans une partie arrière du fuselage, mais qui pourrait être disposé dans une autre partie de l'aéronef 100. Le dihydrogène peut être liquide ou gazeux.

Pour transporter le dihydrogène, l'aéronef 100 comporte au moins une canalisation de transport 112a-b dans laquelle s'écoule le dihydrogène. Pour des raisons de facilité de mise en oeuvre, les canalisations de transport 112a-b sont préférentiellement disposées en partie haute de l'aéronef 100 et s'étendent ainsi le long du fuselage 102 et des ailes 104 en partie haute de ceux-ci.

Dans le mode de réalisation de l'invention présenté à la Fig. 1, il y a une canalisation de transport 112a qui s'étend entre le réservoir 110 et un dispositif consommateur (la pile à combustible, le turboréacteur) qui consomme le dihydrogène et qui assure le transport du dihydrogène du réservoir 110 vers le dispositif consommateur, et il y a une canalisation de transport 112b qui s'étend entre le dispositif consommateur et le réservoir 110 et qui assure le transport du dihydrogène du dispositif consommateur vers le réservoir 110 par exemple dans le cas où le dispositif consommateur n'a pas consommé tout le dihydrogène fourni. Mais il est également possible de prévoir que les deux canalisations de transport constituent deux lignes d'alimentation en parallèle qui transportent le dihydrogène aux moteurs.

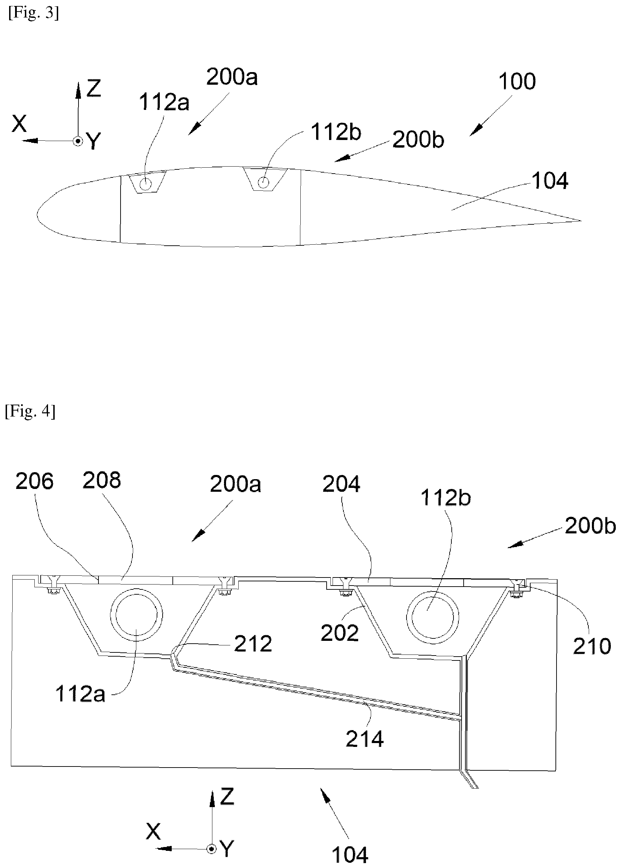

La Fig. 2 montre une coupe du fuselage 102 avec les canalisations de transport 112a-b et la Fig. 3 montre une coupe d'une aile 104 avec les canalisations de transport 112a-b.

Dans le mode de réalisation représenté sur la Fig. 2, les canalisations de transport 112a-b sont logées dans un module fixé à l'extérieur de la peau du fuselage 102, mais elles pourraient être intégrées directement dans le fuselage 102 comme cela est le cas sur la Fig. 3 pour les canalisations de transport 112a-b circulant le long de l'aile 104 et qui sont logées ici dans un caisson de l'aile 104.

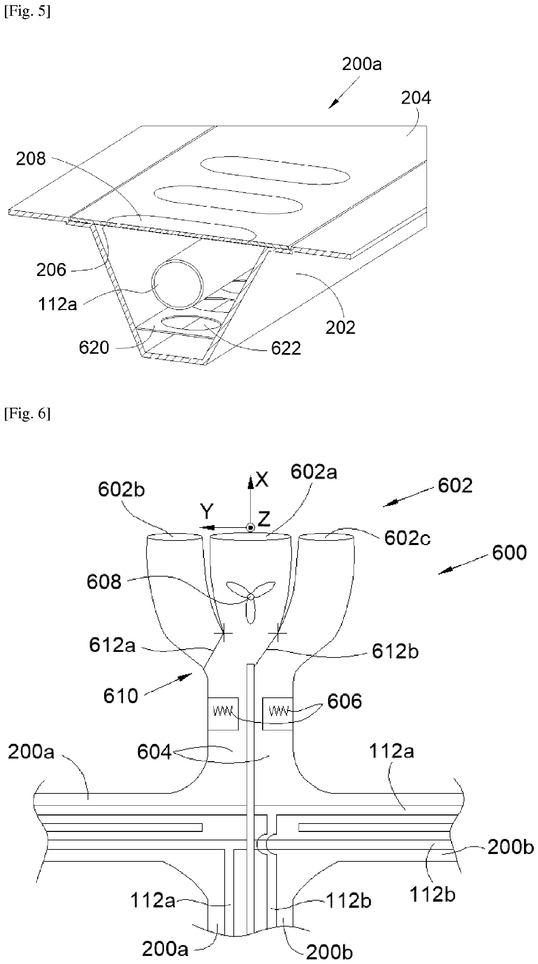

La Fig. 4 montre un agrandissement de la Fig. 3 mais la description qui est faite ci-dessous et qui s'applique à l'aile 104 peut également s'appliquer au fuselage 102 et la Fig. 5 montre une vue en perspective d'un mode de réalisation particulier de l'invention.

Pour chaque canalisation de transport 112a-b, l'aéronef 100 comporte un canal d'enfouissement 200a-b dans lequel est logée ladite canalisation de transport 112a-b.

Le canal d'enfouissement 200a-b comporte un caniveau 202 qui comporte un fond et une ouverture à l'opposé du fond, et un couvercle 204 qui recouvre l'ouverture du caniveau 202 en l'obturant au moins en partie. La canalisation de transport 112a-b est ainsi logée entre le fond et le couvercle 204. La canalisation de transport 112a-b est fixée au caniveau 202 par tous moyens appropriés comme par exemple des colliers.

Dans le mode de réalisation de l'invention présenté sur les Figs. 2 à 5, le caniveau 202 présente une section trapézoïdale, mais des sections de forme différente sont possibles.

Le couvercle 204 constitue une paroi extérieure de l'aéronef 100, c'est-à-dire qu'elle est en contact direct avec l'air extérieur entourant l'aéronef 100. Le couvercle 204 est fixé à la paroi extérieure de l'aéronef 100 par tous moyens de fixation appropriés, comme par exemple ici des boulons 210.

Le couvercle 204 est percé des fenêtres de ventilation 206 qui permettent le passage du dihydrogène, en particulier en cas de fuite de la canalisation de transport 112a-b, vers l'extérieur, limitant d'autant la concentration de dihydrogène dans le canal d'enfouissement 200a-b et les risques liés à la présence de dihydrogène. Préférentiellement, le couvercle 204 est en position supérieure par rapport au fond, c'est-à-dire au-dessus.

Avec un tel arrangement, même en cas de fuite de dihydrogène dans le canal d'enfouissement 200a-b, le dihydrogène s'évacue automatiquement vers l'extérieur et ceci de manière naturelle du fait de la faible densité du dihydrogène gazeux et de la présence des fenêtres de ventilation 206 en partie supérieure dans le couvercle 204, sans qu'il soit nécessaire de mettre des ventilateurs et procure ainsi une installation simple et légère. Ainsi, en cas d'incendie dû à la présence de dihydrogène, le contact direct avec l'air ambiant en mouvement permet de limiter l'extension de l'incendie en soufflant les flammes. En outre, un tel arrangement permet également de confiner les flammes dans le caniveau 202 en cas de déclenchement d'un incendie et ainsi de protéger l'environnement proche.

En outre, le fait de mettre une seule canalisation de transport 112a-b par canal d'enfouissement 200a-b empêche qu'un incendie qui se développe dans un canal d'enfouissement 200a-b du fait d'une fuite de la canalisation de transport 112a-b correspondante dégrade la canalisation de transport 112a-b de l'autre canal d'enfouissement 200a-b.

Pour limiter l'impact des fenêtres de ventilation 206 sur la traînée de l'aéronef 100 en vol, chaque fenêtre de ventilation 206 est fermée par un bouchon 208 réalisé d'un matériau respirant pour le dihydrogène, c'est-à-dire que le bouchon 208 est imperméable pour l'eau extérieure qui ne peut pas pénétrer dans le canal d'enfouissement 200a-b, et perméable, entre autres pour le dihydrogène qui est présent dans le canal d'enfouissement 200a-b et peut s'évacuer vers l'extérieur. Le bouchon 208 est réalisé par exemple en polypropylène ou polyéthylène.

Pour éviter qu'en cas d'incendie, le feu reste confiné dans le canal d'enfouissement 200a-b du fait de la présence des bouchons 208, chaque bouchon 208 est constitué d'un matériau susceptible de rompre sous l'effet de la chaleur, comme par exemple en polypropylène ou polyéthylène. En rompant sous l'effet de la chaleur, le bouchon 208 constitue un fusible qui permet d'ouvrir la fenêtre de ventilation 206 en cas de besoin pour souffler les flammes. En particulier, le matériau pour le bouchon 208 est choisi de manière à rompre lorsque la température à l'intérieur du caniveau 202 atteint une valeur inférieure à la température maximale acceptable par le caniveau 202 et la canalisation de transport 112a-b installée dans le caniveau 202, c'est-à-dire la température à partir de laquelle l'intégrité du caniveau 202 et de la canalisation de transport 112a-b n'est plus garantie.

En cas de surpression, il est également possible de prévoir que le couvercle 204 se rompt sous l'effet de la surpression limitant ainsi les risques de rupture du caniveau 202. À cette fin, la résistance au déchirement du couvercle 204 est inférieure à la résistance au déchirement du caniveau 202, par exemple par la réalisation de zones moins épaisses. Il est également possible de prévoir que la rupture s'effectue au niveau des moyens de fixation du couvercle 204, par exemple en utilisant des boulons fusibles qui rompent au-delà d'une certaine pression.

Au cas où un incendie interviendrait dans le caniveau 202, et afin de limiter les risques de propagation de l'incendie vers l'intérieur de l'aéronef 100, le caniveau 202 est réalisé dans un matériau résistant au feu et plus particulièrement dans un matériau capable de garder ses propriétés mécaniques même en cas d'incendie dans le caniveau 202. Le matériau est par exemple du titane, un alliage de titane ou un matériau comportant une âme non résistante au feu mais recouvert d'une couche de protection résistante au feu comme de la laine de roche ou de la céramique.

Le caniveau 202 comporte au moins un point bas 212 au niveau du fond ce qui permet le drainage de l'eau qui se serait accumulée dans le caniveau 202 vers le/les points bas 212. L'aéronef 100 comporte alors pour chaque point bas 212, une canalisation d'évacuation 214 dont une première extrémité est fluidiquement connectée au caniveau 202 au niveau du point bas 212 et dont une deuxième extrémité débouche vers l'extérieur de l'aéronef 100 et où la canalisation d'évacuation 214 présente une pente descendante entre la première extrémité et la deuxième extrémité pour évacuer par gravité l'eau ainsi récoltée.

Au sol, la canalisation d'évacuation 214 permet d'évacuer l'eau et en vol, la différence de pression entre la première extrémité et la deuxième extrémité permet une aération naturelle supplémentaire du canal d'enfouissement 200a-b à travers les fenêtres de ventilation 206 et les bouchons 208 lorsqu'ils sont présents et qui seront alors préférentiellement respirants.

Pour éviter l'apparition de glace sur les fenêtres de ventilation 206 et donc les bouchons 208 lorsqu'ils sont présents ce qui pourrait empêcher le passage du dihydrogène, l'aéronef 100 comporte un système de ventilation 600 qui est disposé ici au niveau de la partie supérieure de l'aéronef 100 au niveau de la jonction des ailes 104 et qui permet l'introduction de l'air extérieur, le chauffage de cet air extérieur et l'envoi de cet air ainsi chauffé dans chaque canal d'enfouissement 200a-b.

Dans le mode de réalisation de l'invention présenté à la Fig. 6, le système de ventilation 600 comporte des moyens de chauffage qui sont activés en particulier dans le cas de conditions froides afin d'empêcher la création de glace sur les fenêtres de ventilation 206 et les bouchons 208 lorsqu'ils sont présents .

La Fig. 6 montre un mode de réalisation particulier du système de ventilation 600.

Le système de ventilation 600 comporte une entrée d'air 602 ouverte vers l'avant de l'aéronef 100 afin de capter l'air extérieur lorsque l'aéronef 100 avance ou est à l'arrêt.

Le système de ventilation 600 comporte un canal d'aération 604 qui est fluidiquement connecté entre l'entrée 602 et chaque canal d'enfouissement 200a-b qui sont ici au nombre de six, à savoir deux pour chaque aile 104 et deux pour le fuselage 102.

L'entrée d'air 602 alimente ainsi le canal d'aération 604 en air extérieur et le canal d'aération 604 distribue cet air dans chaque canal d'enfouissement 200a-b.

L'aéronef 100 comporte également au moins un moyen de chauffage 606, comme par exemple une résistance chauffante, logé dans le canal d'aération 604. Ainsi, lorsque le moyen de chauffage 606 est en chauffe, l'air qui traverse le canal d'aération 604 se réchauffe et s'écoule dans chaque canal d'enfouissement 200a-b. Chaque canal d'enfouissement 200a-b est ainsi parcouru par de l'air chaud ce qui évite l'apparition de glace sur les fenêtres de ventilation 206 ou fait fondre la glace lorsqu'il y en a.

Le moyen de chauffage 606 peut être activé automatiquement en fonction de la température extérieure ou manuellement par un pilote de l'aéronef 100.

Dans le mode de réalisation de l'invention présenté ici, le canal d'aération 604 comporte un sous-canal bâbord s'étendant d'un premier côté du canal d'aération 604 et alimentant des premiers canaux d'enfouissement 200a qui sont de son côté et un sous-canal tribord s'étendant d'un second côté du canal d'aération 604 et alimentant des deuxièmes canaux d'enfouissement 200b qui sont de son côté. Dans ce mode de réalisation, le moyen de chauffage 606 est également double avec un moyen auxiliaire de chauffage dans chaque sous-canal.

L'entrée d'air 602 est divisée en trois bouches avec une bouche centrale 602a, et pour chaque sous-canal, une bouche latérale 602b-c (602b à bâbord et 602c à tribord), c'est-à-dire une bouche latérale bâbord 602b associée au sous-canal bâbord et une bouche latérale tribord 602c associée au sous-canal tribord.

La bouche centrale 602a est équipée d'un ventilateur 608 qui, lorsqu'il est en fonctionnement, prélève de l'air extérieur à travers la bouche centrale 602a pour la propulser dans chaque sous-canal. Ce fonctionnement est plus particulièrement adapté lorsque l'aéronef 100 est au sol.

Le système de ventilation 600 comporte également un système de sélection 610 qui permet de sélectionner quel sous-canal doit être alimenté par quelle bouche 602a-c.

Le système de sélection 610 assure ainsi, d'une part, que le sous-canal bâbord et les premiers canaux d'enfouissement 200a à bâbord sont alimentés alternativement par la bouche latérale bâbord 602b ou par la bouche centrale 602a et, d'autre part, que le sous-canal tribord et les deuxièmes canaux d'enfouissement 200b à tribord sont alimentés alternativement par la bouche latérale tribord 602c ou par la bouche centrale 602a.

Ici, le système de sélection 610 comporte deux portes 612a-b, à savoir une porte bâbord 612a et une porte tribord 612b. Chaque porte 612a-b est mobile entre une première position dans laquelle la porte 612a-b obture la partie de la bouche centrale 602a qui alimente le côté de ladite porte 612a-b et n'obture pas la bouche latérale 602b-c correspondant au côté de ladite porte 612a-b, et une deuxième position dans laquelle la porte 612a-b obture la bouche latérale 602b-c correspondant au côté de ladite porte 612a-b et n'obture pas la partie de la bouche centrale 602a qui alimente le côté de ladite porte 612a-b.

Dans le mode de réalisation de l'invention présenté sur la Fig. 6, la porte bâbord 612a est dans la deuxième position et la porte tribord 612b est dans la première position, mais dans un fonctionnement normal, les deux portes 612a-b fonctionnent de concert, et sont donc soit toutes les deux dans la première position ou toutes les deux dans la deuxième position.

Lorsque les deux portes 612a-b sont dans la première position, la bouche centrale 602a est obturée et les bouches latérales 602b-c ne sont pas obturées et l'air passe par ces bouches latérales 602b-c. Ce fonctionnement est plus particulièrement adapté lorsque l'aéronef 100 est en vol et que l'air extérieur entre dans les bouches latérales 602b-c du fait de l'avancée de l'aéronef 100.

Lorsque les deux portes 612a-b sont dans la deuxième position, la bouche centrale 602a n'est pas obturée et les bouches latérales 602b-c sont obturées et l'air passe par la bouche centrale 602a. Ce fonctionnement est plus particulièrement adapté lorsque l'aéronef 100 est au sol et que l'air extérieur entre dans la bouche centrale 602a du fait du ventilateur 608.

Le déplacement de chaque porte 612a-b d'une position à l'autre est commandé par exemple par un pilote de l'aéronef 100 et réalisé par un moyen d'actionnement comme par exemple un moteur électrique.

Pour éviter que les attaches qui fixent la canalisation de transport 112a-b dans le canal d'enfouissement 200a-b perturbent l'écoulement de l'air potentiellement réchauffé provenant du système de ventilation 600, le caniveau 202 comporte un plancher intermédiaire 620 (Fig. 5). Le plancher intermédiaire 620 est à distance du fond et sépare le caniveau 202 en un caniveau supérieur dans lequel est fixée la canalisation de transport 112a-b et un caniveau inférieur dans lequel circule l'air provenant du système de ventilation 600. Le caniveau supérieur s'étend entre le plancher intermédiaire 620 et le couvercle 204, le caniveau inférieur s'étend entre le fond et le plancher intermédiaire 620.

Pour permettre le passage de l'air du caniveau inférieur vers le caniveau supérieur, le plancher intermédiaire 620 est percé de trous 622 qui permettent selon leur disposition d'assurer une ventilation homogène du caniveau supérieur ou de localiser le chauffage à des endroits particuliers en fonction des besoins.

## Revendications

1. Aéronef (100) comportant au moins une canalisation de transport (112a-b) dans laquelle s'écoule du dihydrogène et pour chaque canalisation de transport (112a-b), un canal d'enfouissement (200a-b) dans lequel est logée ladite canalisation de transport (112a-b), **caractérisé en ce que** le canal d'enfouissement (200a-b) comporte un caniveau (202) qui comporte un fond et une ouverture à l'opposé du fond et un couvercle (204) qui recouvre l'ouverture du caniveau (202), où le couvercle (204) constitue une paroi extérieure de l'aéronef (100) en contact direct avec un air extérieur entourant l'aéronef (100) et où le couvercle (204) est percé des fenêtres de ventilation (206) qui permettent le passage du dihydrogène vers l'extérieur.

2. Aéronef (100) selon la revendication 1, **caractérisé en ce que** chaque fenêtre de ventilation (206) est fermée par un bouchon (208) réalisé d'un matériau respirant qui est imperméable pour de l'eau extérieure et perméable pour du dihydrogène présent dans le canal d'enfouissement (200a-b).

3. Aéronef (100) selon l'une des revendications 1 ou 2, **caractérisé en ce que** le ou chaque caniveau (202) comporte au moins un point bas (212) au niveau du fond, **en ce que** l'aéronef (100) comporte, pour chaque point bas (212), une canalisation d'évacuation (214) dont une première extrémité est fluidiquement connectée au caniveau (202) au niveau du point bas (212) et dont une deuxième extrémité débouche vers l'extérieur de l'aéronef (100) et **en ce que** la canalisation d'évacuation (214) présente une pente descendante entre la première extrémité et la deuxième extrémité.

4. Aéronef (100) selon l'une des revendications 1 à 3, **caractérisé en ce que** l'aéronef (100) comporte un système de ventilation (600) qui est arrangé pour chauffer de l'air extérieur et pour envoyer cet air ainsi chauffé dans chaque canal d'enfouissement (200a-b).

5. Aéronef (100) selon la revendication 4, **caractérisé en ce que** le système de ventilation (600) comporte une entrée d'air (602) ouverte vers l'avant de l'aéronef (100), un canal d'aération (604) fluidiquement connecté entre l'entrée (602) et chaque canal d'enfouissement (200a-b), et au moins un moyen de chauffage (606) logé dans le canal d'aération (604).

6. Aéronef (100) selon la revendication 5, **caractérisé en ce que** le canal d'aération (604) comporte un sous-canal bâbord s'étendant d'un premier côté du canal d'aération (604) et alimentant des premiers canaux d'enfouissement (200a) et un sous-canal tribord s'étendant d'un second côté du canal d'aération (604) et alimentant des deuxièmes canaux d'enfouissement (200b), **en ce qu'**il y a un moyen auxiliaire de chauffage dans chaque sous-canal, **en ce que** l'entrée d'air (602) comporte une bouche centrale (602a) équipée d'un ventilateur (608), une bouche latérale bâbord (602b) associée au sous-canal bâbord et une bouche latérale tribord (602c) associée au sous-canal tribord, un système de sélection (610) qui est arrangé pour assurer, d'une part, que le sous-canal bâbord et les premiers canaux d'enfouissement (200a) sont alimentés alternativement par la bouche latérale bâbord (602b) ou par la bouche centrale (602a) et, d'autre part, que le sous-canal tribord et les deuxièmes canaux d'enfouissement (200b) sont alimentés alternativement par la bouche latérale tribord (602c) ou par la bouche centrale (602a).

7. Aéronef (100) selon la revendication 6, **caractérisé en ce que** le système de sélection (610) comporte une porte bâbord (612a) et une porte tribord (612b), et **en ce que** chaque porte (612a-b) est mobile entre une première position dans laquelle la porte (612a-b) obture la partie de la bouche centrale (602a) qui alimente le côté de ladite porte (612a-b) et n'obture pas la bouche latérale (602b-c) correspondant au côté de ladite porte (612a-b), et une deuxième position dans laquelle la porte (612a-b) obture la bouche latérale (602b-c) correspondant au côté de ladite porte (612a-b) et n'obture pas la partie de la bouche centrale (602a) qui alimente le côté de ladite porte (612a-b).

8. Aéronef (100) selon l'une des revendications 4 à 7, **caractérisé en ce que** le caniveau (202) comporte un plancher intermédiaire (620) qui sépare le caniveau (202) en un caniveau supérieur dans lequel est fixée la canalisation de transport (112a-b) et un caniveau inférieur dans lequel circule l'air chaud provenant du système de ventilation (600), et **en ce que** le plancher intermédiaire (620) est percé de trous (622).

## Patentansprüche

1. Luftfahrzeug (100), welches mindestens eine Transportleitung (112a-b), in der Diwasserstoff fließt, und für jede Transportleitung (112a-b) einen Verlegekanal (200a-b), in dem die Transportleitung (112a-b) aufgenommen ist, umfasst, **dadurch gekennzeichnet, dass** der Verlegekanal (200a-b) eine Rinne (202), die einen Boden und eine Öffnung gegenüber dem Boden umfasst, und eine Abdeckung (204), welche die Öffnung der Rinne (202) bedeckt, umfasst, wobei die Abdeckung (204) eine Außenwand des Luftfahrzeugs (100) bildet, die in direktem Kontakt mit einer das Luftfahrzeug (100) umgebenden Außenluft steht, und wobei die Abdeckung (204) von Belüftungsfenstern (206) durchbrochen ist, die das Hindurchströmen des Diwasserstoffs nach außen ermöglichen.

2. Luftfahrzeug (100) nach Anspruch 1, **dadurch gekennzeichnet, dass** jedes Belüftungsfenster (206) durch ein Verschlussstück (208) verschlossen ist, das aus einem atmungsaktiven Material hergestellt ist, das undurchlässig für Außenwasser und durchlässig für im Verlegekanal (200a-b) vorhandenen Diwasserstoff ist.

3. Luftfahrzeug (100) nach einem der Ansprüche 1 oder 2, **dadurch gekennzeichnet, dass** die oder jede Rinne (202) mindestens einen tiefliegenden Punkt (212) am Boden umfasst, dadurch, dass das Luftfahrzeug (100) für jeden tiefliegenden Punkt (212) eine Ablassleitung (214) umfasst, von der ein erstes Ende mit der Rinne (202) an dem tiefliegenden Punkt (212) fluidisch verbunden ist und von der ein zweites Ende an der Außenseite des Luftfahrzeugs (100) mündet, und dadurch, dass die Ablassleitung (214) ein Gefälle zwischen dem ersten Ende und dem zweiten Ende aufweist.

4. Luftfahrzeug (100) nach einem der Ansprüche 1 bis 3, **dadurch gekennzeichnet, dass** das Luftfahrzeug (100) ein Belüftungssystem (600) umfasst, das dafür ausgelegt ist, Außenluft zu erwärmen und diese so erwärmte Luft in jeden Verlegekanal (200a-b) zu lenken.

5. Luftfahrzeug (100) nach Anspruch 4, **dadurch gekennzeichnet, dass** das Belüftungssystem (600) einen zur Vorderseite des Luftfahrzeugs (100) hin offenen Lufteinlass (602), einen zwischen dem Einlass (602) und jedem Verlegekanal (200a-b) fluidisch verbundenen Belüftungskanal (604) und mindestens ein in dem Belüftungskanal (604) untergebrachtes Heizmittel (606) umfasst.

6. Luftfahrzeug (100) nach Anspruch 5, **dadurch gekennzeichnet, dass** der Belüftungskanal (604) einen backbordseitigen Unterkanal, der sich auf einer ersten Seite des Belüftungskanals (604) erstreckt und erste Verlegekanäle (200a) versorgt, und einen steuerbordseitigen Unterkanal, der sich auf einer zweiten Seite des Belüftungskanals (604) erstreckt und zweite Verlegekanäle (200b) versorgt, umfasst, dadurch, dass in jedem Unterkanal ein Hilfsheizmittel vorhanden ist, dadurch, dass der Lufteinlass (602) eine mit einem Lüfter (608) ausgestattete zentrale Mündung (602a), eine dem backbordseitigen Unterkanal zugeordnete backbordseitige seitliche Mündung (602b) und eine dem steuerbordseitigen Unterkanal zugeordnete steuerbordseitige seitliche Mündung (602c) umfasst, wobei ein Auswahlsystem (610) dafür ausgelegt ist, einerseits sicherzustellen, dass der backbordseitige Unterkanal und die ersten Verlegekanäle (200a) wahlweise über die backbordseitige seitliche Mündung (602b) oder über die zentrale Mündung (602a) versorgt werden, und andererseits, dass der steuerbordseitige Unterkanal und die zweiten Verlegekanäle (200b) wahlweise über die steuerbordseitige seitliche Mündung (602c) oder über die zentrale Mündung (602a) versorgt werden.

7. Luftfahrzeug (100) nach Anspruch 6, **dadurch gekennzeichnet, dass** das Auswahlsystem (610) eine backbordseitige Tür (612a) und eine steuerbordseitige Tür (612b) umfasst, und dadurch, dass jede Tür (612a-b) beweglich ist zwischen einer ersten Position, in der die Tür (612a-b) den Teil der zentralen Mündung (602a), der die Seite der Tür (612a-b) versorgt, verschließt und die der Seite der Tür (612a-b) entsprechende seitliche Mündung (602b-c) nicht verschließt, und einer zweiten Position, in der die Tür (612a-b) die der Seite der Tür (612a-b) entsprechende seitliche Mündung (602b-c) verschließt und den Teil der zentralen Mündung (602a), der die Seite der Tür (612a-b) versorgt, nicht verschließt.

8. Luftfahrzeug (100) nach einem der Ansprüche 4 bis 7, **dadurch gekennzeichnet, dass** die Rinne (202) einen Zwischenboden (620) umfasst, der die Rinne (202) in eine obere Rinne, in der die Transportleitung (112a-b) befestigt ist, und eine untere Rinne, in der die vom Belüftungssystem (600) kommende warme Luft strömt, unterteilt, und dadurch, dass der Zwischenboden (620) mit Löchern (622) versehen ist.

## Claims

1. Aircraft (100) having at least one transport pipe (112a-b) in which dihydrogen flows and, for each transport pipe (112a-b), an embedding channel (200a-b) in which said transport pipe (112a-b) is housed, **characterized in that** the embedding channel (200a-b) has a gutter (202) that has a bottom and an opening opposite the bottom and a cover (204) that covers the opening in the gutter (202), wherein the cover (204) constitutes an outer wall of the aircraft (100) in direct contact with external air surrounding the aircraft (100) and wherein the cover (204) has ventilation windows (206) passing through it that allow passage of the dihydrogen towards the outside.

2. Aircraft (100) according to Claim 1, **characterized in that** each ventilation window (206) is closed by a stopper (208) made from a breathable material that is impermeable to external water and permeable to dihydrogen present in the embedding channel (200a-b).

3. Aircraft (100) according to either of Claims 1 and 2, **characterized in that** the or each gutter (202) has at least one low point (212) at the bottom, **in that** the aircraft (100) has, for each low point (212), an evacuation pipe (214) of which a first end is fluidically connected to the gutter (202) at the low point (212) and of which a second end opens towards the outside of the aircraft (100) and **in that** the evacuation pipe (214) has a descending slope between the first end and the second end.

4. Aircraft (100) according to one of Claims 1 to 3, **characterized in that** the aircraft (100) has a ventilation system (600) that is arranged to heat external air and to send this air thus heated into each embedding channel (200a-b).

5. Aircraft (100) according to Claim 4, **characterized in that** the ventilation system (600) has an air inlet (602) that is open towards the front of the aircraft (100), an aeration channel (604) fluidically connected between the inlet (602) and each embedding channel (200a-b), and at least one heating means (606) housed in the aeration channel (604).

6. Aircraft (100) according to Claim 5, **characterized in that** the aeration channel (604) has a port-side sub-channel extending on a first side of the aeration channel (604) and supplying first embedding channels (200a) and a starboard-side sub-channel extending on a second side of the aeration channel (604) and supplying second embedding channels (200b), **in that** there is an auxiliary heating means in each sub-channel, **in that** the air inlet (602) has a central aperture (602a) equipped with a fan (608), a port-side lateral aperture (602b) associated with the port-side sub-channel and a starboard-side lateral aperture (602c) associated with the starboard-side sub-channel, a selection system (610) that is arranged to ensure, on the one hand, that the port-side sub-channel and the first embedding channels (200a) are supplied alternately via the port-side lateral aperture (602b) or via the central aperture (602a) and, on the other hand, that the starboard-side sub-channel and the second embedding channels (200b) are supplied alternately via the starboard-side lateral aperture (602c) or via the central aperture (602a).

7. Aircraft (100) according to Claim 6, **characterized in that** the selection system (610) has a port-side door (612a) and a starboard-side door (612b), and **in that** each door (612a-b) is able to move between a first position in which the door (612a-b) shuts off the part of the central aperture (602a) that supplies the side that said door (612a-b) is on and does not shut off the lateral aperture (602b-c) corresponding to the side that said door (612a-b) is on and a second position in which the door (612a-b) shuts off the lateral aperture (602b-c) corresponding to the side that said door (612a-b) is on and does not shut off the part of the central aperture (602a) that supplies the side that said door (612a-b) is on.

8. Aircraft (100) according to one of Claims 4 to 7, **characterized in that** the gutter (202) has an intermediate floor (620) that separates the gutter (202) into an upper gutter in which the transport pipe (112a-b) is fastened and a lower gutter in which the hot air coming from the ventilation system (600) circulates, and **in that** the intermediate floor (620) has holes (622) passing through it.
